# EUROPÄISCHE PATENTSCHRIFT

(11) **EP 3 329 690 B1**
(45) Veröffentlichungstag und Bekanntmachung des Hinweises auf die Patenterteilung: **09.12.2020**
(21) Anmeldenummer: 16734615.4
(22) Anmeldetag: 29.06.2016
(51) Int. Cl.: H04R 1/04, H04R 19/00, H04R 19/04, H04R 1/28, B29L 31/34, B29C 44/12, B29K 101/12, B29C 44/18

(54) **MIKROFON IN TOP-PORTAUSFÜHRUNG UND VERFAHREN ZUR HERSTELLUNG**
MICROPHONE WITH TOP-PORT AND METHODE OF MANUCATURING
MICROPHONE COMME À ORIFICE SUPÉRIEURE ET MÉTHODE DE FABRICATION

(30) Priorität: 31.07.2015 DE 102015112642
(43) Veröffentlichungstag der Anmeldung: 06.06.2018
(73) Patentinhaber: TDK Corporation, Tokyo 108-0023 (JP)
(72) Erfinder: PAHL, Wolfgang, 81379 München (DE)
(74) Vertreter: Epping - Hermann - Fischer
(86) Internationale Anmeldenummer: PCT/EP2016/065193
(87) Internationale Veröffentlichungsnummer: WO 2017/021068

(56) Entgegenhaltungen:
- EP-A1- 1 690 893
- EP-A1- 2 804 394
- DE-A1-102006 046 292
- DE-A1-102010 026 519
- DE-A1-102013 106 353
- JP-A- 2004 208 067

## Beschreibung

Die vorliegende Erfindung betrifft ein Mikrofon sowie ein Verfahren zur Herstellung eines Mikrofons. Dabei kann es sich insbesondere um ein Kondensatormikrofon insbesondere in MEMS Bauweise handeln. Ein solches Mikrofon weist ein Wandler¬element auf, das in einem Package verkapselt werden muss. Um bei einem solchen Mikrofon eine gute Aufnahmequalität zu ermöglichen, ist ein möglichst großes Rückvolumen erforderlich, da durch ein großes Rückvolumen die Sensibilität des Mikrofons für die Aufzeichnung von Druckschwankungen verbessert wird. Ferner sollte bei dem Mikrofon der Aufwand für die interne elektrische Verschaltung gering gehalten werden und das Wandlerelement vor mechanischen Stress geschützt werden.

Mikrofone können in "top port" Bauform ausgeführt sein. Dabei liegen Schalleintritt und externe Anschlüsse auf gegenüberliegenden Seiten des Gehäuses oder des Packages. In einer Variante wird der MEMS-Chip an die Schallöffnung an der Oberseite des Packages angeordnet, was zu einer komplizierten internen Aufbau- und Verbindungstechnik führt. Alternativ kann eine Schallführung vom Eintritt an der Oberseite bis zum MEMS-Chip an der Unterseite vorgesehen werden, was ebenfalls konstruktiv nur mit großem Aufwand zu realisieren ist.

Aus der D1 DE 102006046292 A1 ist ein Package für ein Mikrofon bekannt, das eine Bodenplatte und ein oberes Teil aufweist. Zwischen Mikrofonwandler und oberem Teil ist ein beidseitig anliegendes weichelastisches und kompressibles Verbindungsteil angeordnet.

Aus DE 10 2004 011148 B3 ist ein Mikrofon bekannt, bei dem ein Mikrofonchip mittels eines Deckels und einer Schalldichtung verkapselt wird. Der Mikrofonchip ist ferner über eine starre Befestigungseinrichtung auf einem Substrat befestigt. Bei diesem Mikrofon treten starke mechanische Kopplungen sowohl zwischen dem Deckel und dem Mikrofonchip als auch zwischen dem Mikrofonchip und dem Substrat auf. Die Kopplungen können die Funktionsweise des Mikrofonchips beeinträchtigen und ferner zu einem temperaturabhängigen Verhalten des Systems führen. Ein ähnliches Mikrofon ist aus der DE 10 2006 046292 A1 bekannt.

Ein weiteres Mikrofon ist aus US 8,218,794 B2 bekannt. Bei diesem Mikrofon ist der Mikrofonchip über eine Feder auf dem Substrat befestigt und drückt den Mikrofonchip gegen die obere Innenwand des Mikrofongehäuses, wobei eine Abdichtung der Schallöffnung erfolgt, die im oberen Teil des Mikrofongehäuses angeordnet ist.

In der Praxis bringen die beiden genannten Lösungen eine Reihe von Problemen mit sich. Erstens ist der MEMS Chip beidseitig zwischen Oberteil und Bodenteil eingespannt, was durch mechanischen Stress seine Charakteristik beeinflusst. Dem wird durch Verwendung eines weichen Klebstoffs bzw. durch als Federn ausgebildete Kontaktelemente zu begegnen versucht. Eine weitere Schwierigkeit besteht auch in den Toleranzen von Chipdicke und -montage, Höhe des Innenraums des Package und Höhe des Verbindungsspalts zwischen Oberteil und Bodenteil des Package, die alle zur Unbestimmtheit des Spalts zwischen MEMS Chip und Oberteil bzw. Kappe beitragen. Darüber hinaus ist es außerordentlich schwierig, die Menge des Verbindungsmittels so zu bemessen, dass unter allen Umständen eine umlaufende Abdichtung des Schalleintrittskanals zustande kommt, jedoch ein Verlaufen des Verbindungs¬mittels bis in die MEMS-Kavität hinein ausgeschlossen ist. Aus der DE 10 2010 026519 A1 ist ein Mikrofon-Modul bekannt, welches über eine Dichtung in einem externen Gehäuse eingebaut ist, wobei die Dichtstruktur einen Kunststoff umfasst, in dem Gasbläschen verteilt sind.

Aufgabe der vorliegenden Erfindung ist es, ein verbessertes Mikrofon bereitzustellen, das zumindest einen der oben genannten Nachteile überwindet. Eine weitere Aufgabe der vorliegenden Erfindung ist es, ein Verfahren zur Herstellung eines solchen Mikrofons anzugeben.

Die Aufgaben werden durch ein Mikrofon gemäß dem vorliegenden Anspruch 1 bzw. durch ein Verfahren gemäß dem zweiten unabhängigen Anspruch gelöst.

Es wird ein Mikrofon angegeben, welches in einem zweiteiligen Gehäuse montiert ist, welches ein Bodenteil und ein Oberteil umfasst. Im Inneren des Gehäuses ist ein Wandlerelement, also der aktive Teil des Mikrofons angeordnet und elektrisch und mechanisch mit dem Bodenteil verbunden.

Zur akustischen Anbindung des Wandlerelements mit dem Oberteil ist zwischen dem Wandlerelement und dem Oberteil ein Verbindungselement angeordnet, welches sowohl am Wandlerelement als auch an der Innenseite des Oberteils anliegt. Das Verbindungselement ist nachgiebig und insbesondere weichelastisch mit relativ geringem E-Modul ausgebildet. Es umfasst einen Kunststoff, in dem freie oder gekapselte Gasbläschen verteilt sind, die durch Aufschäumen erzeugt sind. Die Menge der Gasbläschen im Kunststoff ist so bemessen, dass sie im Verbindungselement einen Volumenanteil zwischen 50 und 98 Prozent aufweisen. Das Verbidnungselement weist dabei eine überwiegend geschlossenzellige Schaumstruktur auf. Das Aufschäumen des Verbindungselements bzw. das Erzeugen der Gasbläschen ist erst im Gehäuse erfolgt, so dass das Verbindungselement an Wandlerelement und Oberteil kompressionsfrei und dicht anliegt.

Das erfindungsgemäße Verbindungselement weist durch die eingeschlossenen Gasbläschen eine Kompressibilität und einen geringen E-Modul auf, so dass allein dadurch eine gewisse Elastizität des Verbindungselements erzielt wird. Je höher der Volumenanteil der Gasblässchen gewählt wird, umso weicher und kompressibler wird das Verbindungselement.

Ist der Kunststoff des Verbindungselements ein zu weiches Polymer, kann er bei Raumtemperatur einen linearen thermischen Ausdehnungskoeffizienten aufweisen, der mehr als 1000ppm/K beträgt. Vorzugsweise sind die mechanischen Eigenschaften des Kunststoffs daher so gewählt, dass der thermische Ausdehnungskoeffizient des Kunststoffs im aufgeschäumten Zustand bei Raumtemperatur kleiner gleich 300ppm/K beträgt.

Der Kunststoff des Verbindungselements kann einen Kunststoff umfassen, in dem Gasbläschen verteilt sind, und der ausgewählt aus a) oder b):
a) einem Thermoplast mit einer Erweichungstemperatur zwischen 100 und 220°C
b) einem Duroplasten mit einem thermischen Ausdehnungskoeffizienten kleiner gleich 300ppm/K bei Raumtemperatur.

Der Kunststoff des Verbindungselements ist gemäß einer Ausführung ein Thermoplast. Dies hat den Vorteil, dass er einen Erweichungspunkt aufweist. Dieser ermöglicht es wiederum, die Gasbläschen erst nach dem Aufschmelzen des thermoelastischen Kunststoffs freizusetzen werden wobei der Kunststoff so expandieren kann. Durch die Expansion des thermoplastischen Kunststoffs wird der Spalt zwischen Wandlerelement und Oberteil sicher verschlossen. Das Verbindungselement bildet eine gute Abdichtung zwischen Wandlerelement und Oberteil aus.

Das Verbindungselement kann aber auch aus einem duroplastischen Kunststoff ausgebildet werden. Wenn dessen Härtungstemperatur - bei gegebener thermischer Aushärtbarkeit - über der Expansionstemperatur liegt, können die freigesetzten Gasbläschen fest in die Kunststoffmatrix des Verbindungselements eingeschlossen werden. Hat der Kunststoff einen anderen Härtungsmechanismus, so kann er nach der Expansion unabhängig von der Temperatur ausgehärtet werden.

In einer Ausführungsform ist im Oberteil ein Schalleinlass und im Wandler eine Schallöffnung vorgesehen. Dabei dient das Verbindungselement zur Ausformung eines Schallkanals für das Mikrofon. Dieser verbindet den Schalleinlass im Oberteil mit der Schallöffnung im Wandlerelement, wobei das Verbindungselement den Schallkanal dicht gegen das restliche Innenvolumen des Gehäuses abdichtet. Auf diese Weise gelingt es, das restliche Innenvolumen des Gehäuses als Rückvolumen des Mikrofons zu nutzen, da es aufgrund der angewandten Flipchip Montage an die aktive Seite des Wandlerelements angrenzt.

Das Frontvolumen bildet sich dann im Schallkanal und über der Membran aus, die den zentralen Teil des Wandlerelements darstellt. Mit einem Verbindungselement, welches durch Aufschäumung eines Kunststoffs durch in situ Freisetzen von Gasbläschen innerhalb des erweichten (thermoplastischen) oder des noch viskosen ungehärteten (duroplastischen) Kunststoffs gebildet wird, lässt sich in einfacher Weise der Schallkanal abdichten, ohne dass es infolge von Produktionstoleranzen, die zu unterschiedlichen Spalthöhen zwischen Wandlerelement und Oberteil führen, Probleme mit der Abdichtung gibt, oder dass die Dichtung beim Verschließen des Gehäuses durch Verbinden von Oberteilen und Bodenteil eine zu starke Kompression auf das Wandlerelement ausübt.

Der thermoplastische Kunststoff weist einen Erweichungspunkt Tₘ auf, ab dem der feste Kunststoff beim Erhitzen in einen viskosen Zustand übergeht.

Der Duroplast geht oberhalb einer Härtungstemperatur in einen vernetzten und dadurch härteren Zustand über.

Weiterhin weist das Verbindungselement eine Kunststoffmischung auf, die neben dem Kunststoff ein Treibmittel umfasst, welches bei einer Expansionstemperatur Tₓ ein Gas freisetzt. Erweichungspunkt und Expansionstemperatur werden vorzugsweise so gewählt, dass die Expansionstemperatur oberhalb der Erweichungstemperatur liegt. Bei Verwendung eines duroplastischen Kunststoffs für das Verbindungselement liegt die Härtungstemperatur oberhalb der Expansionstemperatur. Auf diese Weise wird gewährleistet, dass nach dem Freisetzen der Gasbläschen aus dem im Kunststoff verteilten Treibmittel die Viskosität des erweichten Kunststoffs der Expansion nur geringe Kräfte entgegensetzt. Vorzugsweise wird aber gleichzeitig die Viskosität im erweichten oder noch ungehärteten Zustand so ausreichend hoch eingestellt, dass es nicht zu einem zu starken Verlaufen der Kunststoffmasse kommt. Auf diese Weise kann gewährleistet werden, dass der schon weiche oder noch viskose Kunststoff nicht in die Schallöffnung des Wandlers eindringt oder gar bis auf die Membran fließt. Letzteres würde einen Ausfall des Mikrofons bedeuten.

Ein auch bei Erweichen und Expansion einigermaßen strukturstabiler Thermoplast gewährleistet auch, dass die Geometrie des Schallkanals reproduzierbar hergestellt werden kann. Das gleiche gilt bei Verwendung ungehärteter duroplastischer Kunststoffe.

Damit sich aus Oberteil und Bodenteil ein Hohlraumgehäuse ausbilden kann, ist zumindest eines dieser beiden Gehäuseteile wannenförmig ausgebildet. Oberteil und Bodenteil sind vorzugsweise mit einem Klebstoff verklebt, der gleichzeitig das Gehäuse verschließt.

Auch Konstruktionen aus flachen Ober- und Bodenteilen mit einem dazwischen angeordneten Rahmen sind möglich. Als Verbindungsmittel kann auch Lot verwendet werden.

In einer Ausführungsform ist das Wandlerelement über ein Federelement elektrisch und mechanisch mit dem Bodenteil verbunden. Mit dem Federelement gelingt eine weitere elastische beziehungsweise federnde Aufhängung des Wandlerelements, die ein zu starkes Einwirken von mechanischen Kräften durch die Aufhängung und das Verschließen des Gehäuses vermeidet.

Das Federelement kann eine Federkonstante aufweisen, die durch den maximal entstehenden Expansionsdruck der thermoplastischen Kunststoffmischung beim Freisetzen der Gasbläschen noch ausreichend Kraft entgegensetzt. Nach dem Expandieren des thermoplastischen Kunststoffs und dem wieder Abkühlen erstarrt der Kunststoff und bildet seinerseits das elastische Verbindungselement aus. Dessen thermomechanische Eigenschaften können so eingestellt sein, dass der E-Modul, also die Kraft, die der Kompression des Verbindungselements entgegen wirkt, annähernd gleich der Federkonstante der Federelemente ist. Möglich ist es jedoch auch, voneinander unterschiedliche E-Moduln für Federelemente und Verbindungselement zu kombinieren.

Die Federelemente sind vorzugsweise durch Mikrostrukturierung ausgebildet und weisen erste Enden auf, die auf dem Bodenteil befestigt sind, verlaufen schräg zur Oberfläche des Bodenteils oder sind anderweitig von der Oberfläche weggeknickt oder weggeführt und weisen zweite Enden auf, die im Abstand über dem Bodenteil angeordnet sind. Die Federelemente können als Blatt- oder Spiralfedern ausgebildet sein. Sie können gebogene oder gerade Abschnitte aufweisen, die unter Einschluss eines Winkels miteinander verbunden sind. Vorzugsweise sind die Federelemente so abgeknickt, dass ein am Bodenteil befestigter erster Abschnitt schließlich in einen parallel dazu geführten und vom Bodenteil beabstandeten weiteren Abschnitt überleitet.

Das Wandlerelement wird dann auf die zweiten Enden der Federelemente aufgesetzt und mit diesen verbunden, vorzugsweise durch Auflöten.

Dabei werden sowohl die durch die Verspannung vertikal auf das Wandlerelement einwirkenden Kräfte als auch durch seitlichen Verzug erzeugte Scherkräfte elastisch abgedämpft.

In der Summe ergeben sich somit zumindest vier verschiedene Ausführungsformen A bis D:
A. Das Verbindungselement ist ein Thermoplast und die Verbindung des Wandlerelements zum Bodenteil sind Federelemente. Dies hat den Vorteil, dass das Verbindungselement keine speziellen Federeigenschaften haben muss.
B. Das Verbindungselement ist ein Thermoplast und die Verbindung des Wandlerelements zum Bodenteil erfolgt ohne Federelemente. Dann wird bei jedem Überschreiten der Erweichungstemperatur etwaiger Stress herausgenommen. Daher muss auch hier wie bei A das Verbindungselement keine speziellen Federeigenschaften haben
C. Das Verbindungselement ist ein Duroplast und die Verbindung des Wandlerelements zum Bodenteil umfasst Federelemente. Dann muss auch hier das Verbindungselement keine speziellen Federeigenschaften haben
D. Das Verbindungselement ist ein Duroplast und die Verbindung des Wandlerelements zum Bodenteil umfasst keine Federelemente. Hier droht zwar eine Verspannung des Wandlerelements zwischen Ober- und Bodenteil. Aber durch den gegebenen Gasbläschenanteil reicht die Federeigenschaft i.d.R. aus.

Das Wandlerelement selbst ist vorzugsweise ein aus einem einkristallinen Material mikrostrukturierter MEMS-Chip mit integrierter Membran und Rückelektrode. Die Membran ist das bewegliche Teil des Wandlerelements und reagiert empfindlich auf Verspannungen, die durch die erfindungsgemäße Konstruktion minimiert sind. Die Wandlercharakteristik ergibt sich aus der druckabhängigen Kapazität zwischen starrer und beweglicher Elektrode.

Der Thermoplast des Verbindungselements ist so ausgewählt, dass er eine günstige Erweichungstemperatur aufweist. Das Treibmittel ist vorzugsweise homogen im Thermoplasten verteilt und vorzugsweise fest und feinteilig ausgebildet, um die Größe der sich ausbildenden Gasbläschen minimal zu halten. Das Treibmittel kann dabei aus einem in Gase zerfallenden Salz bestehen. Das Treibmittel kann auch flüchtige Substanzen freisetzen. Das Treibmittel kann auch eine einemulgierte viskose Phase sein.

Beispielhaft und nicht ausschließlich seien Ammoniumsalze, Carbonate, Carbonsäuren, Anhydride, Peroxide oder Blähgraphit genannt. Blähgraphit hat darüber hinaus den Vorteil, dass das freigesetzte Gas vollständig in der Graphitstruktur gebunden bleibt. Dadurch wird vermieden, dass Gasbläschen aus einer niederviskosen erweichten thermoplastischen Mischung aufsteigen können oder dass sich die gebildeten kleineren Gasbläschen zu größeren Gasbläschen und damit zu Hohlräumen im Verbindungsmittel vereinen.

Im Folgenden wird die Erfindung anhand von Ausführungsbeispielen und der dazugehörigen Figuren näher erläutert. Die Figuren sind nur schematisch und nicht maßstabsgetreu ausgeführt. Sie zeigen Querschnitte bei der Herstellung eines erfindungsgemäßen Mikrofons beziehungsweise bei der Verkapselung eines Wandlerelements während der Herstellung eines Mikrofons.
- Figuren 1A bis 1C: zeigen verschiedene Verfahrensstufen gemäß einer ersten Verfahrensvariante.
- Figuren 2A bis 2C: zeigen verschiedene Verfahrensstufen gemäß einer zweiten Verfahrensvariante.
- Figur 3: zeigt ein Mikrofon gemäß einer weiteren Ausführungsform.
- Figur 4: zeigt ein Mikrofon gemäß noch einer weiteren Ausführungsform.

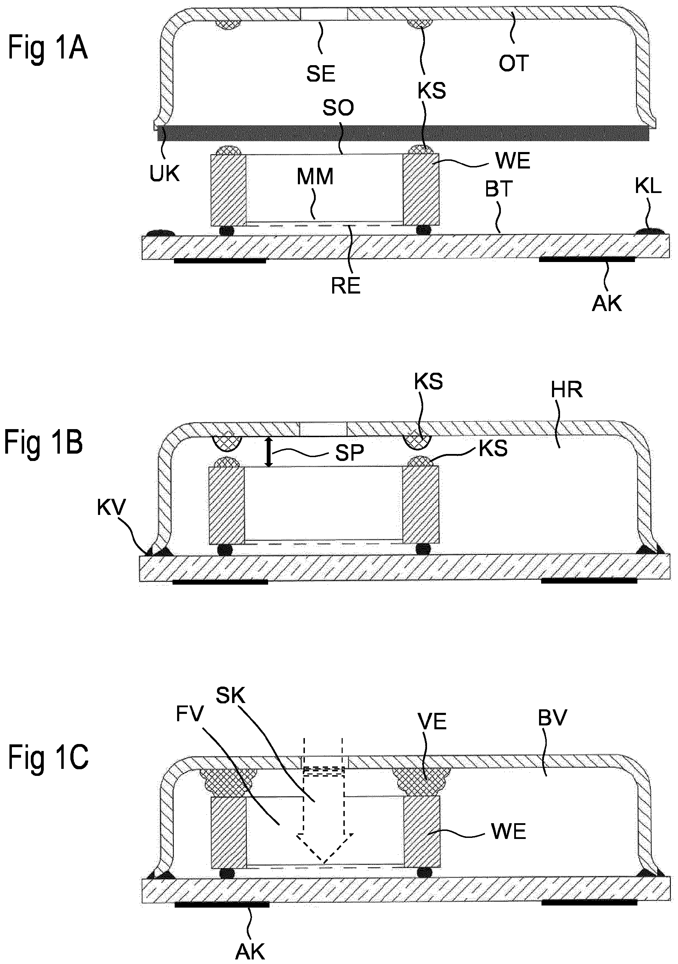

Figur 1A zeigt die Komponenten eines Mikrofons unmittelbar vor Verschließen des Gehäuses. In der dargestellten Ausführung ist das Bodenteil BT flach ausgebildet und umfasst beispielsweise ein keramisches Plättchen. Das Bodenteil BT kann darüber hinaus einen mehrschichtigen Aufbau aufweisen, bei dem zwischen den einzelnen Schichten strukturierte Leiterbahnen angeordnet sind, die zumindest eine weitere Verdrahtungsebene für eine Verschaltung der Mikrofonkomponenten beziehungsweise zur Verbindung der Mikrofonkomponenten mit Außenkontakten AK an der Unterseite des Bodenteils BT darstellen.

Das Wandlerelement WE selbst ist auf das Bodenteil BT aufgelötet, entweder auf flächigen Metallkontakten oder direkt auf die obere Mündung eines Vias.

Über die elektrische und mechanische Verbindung, die mit der Lötstelle hergestellt wird, sind Membran MM und Rückelektrode RE mit dem Bodenteil BT und darüber hinaus mit den Außenkontakten AK oder einem weiteren in der Figur nicht dargestellten Chipbauelement innerhalb des Gehäuses verbunden.

Das zweite Gehäuseteil, hier das Oberteil OT, ist kappenförmig ausgebildet und besteht zum Beispiel aus einer tiefgezogenen Metallkappe. Es kann aber auch andere Materialien umfassen oder mehrschichtig aufgebaut sein. Auf der Oberseite des Oberteils OT ist ein Schalleinlass SE in Form von einer oder mehreren Öffnungen vorgesehen.

Auf der Oberseite des Bodenteils BT ist eine strukturierte Klebstoffschicht KL aufgebracht, auf die die Unterkante UK des Oberteils OT aufgesetzt werden kann.

Weiterhin ist entweder ausschließlich auf der Oberseite des Wandlerelements WE, ausschließlich auf der Innenseite des Oberteils OT oder sowohl auf der Innenseite des Oberteils als auch auf der Oberseite des Wandlerelements eine thermoplastische Kunststoffmischung KS in strukturierter Form aufgebracht. Diese ist so strukturiert, dass sie entweder auf dem Wandlerelement die Schallöffnung SO oder auf dem Oberteil OT den Schalleinlass SE oder beides ringförmig umschließt.

Das Oberteil wird nun mit seiner Unterkante UK auf die Klebstoffschicht KL aufgesetzt und verklebt. Der Klebstoff härtet vorzugsweise zu einem Duroplasten und bildet eine thermisch stabile Klebeverbindung KV aus. Sofern hier eine thermische Härtung erfolgt, ist es vorteilhaft, wenn die Temperatur während der unter der Expansionstemperatur Tₓ bleibt.

Nach dem Aufsetzen und Verbinden von Oberteil und Bodenteil sind Schalleinlass SE und Schallöffnung SO bevorzugt konzentrisch übereinander angeordnet. Der Schalleinlass SE kann auch mit einem Mittenversatz in der Schallöffnung SO angeordnet sein. Sofern der Kunststoff auf beiden zueinander weisenden Oberflächen aufgebracht ist, so stehen sich die beiden Strukturen an thermoplastischem Kunststoff direkt gegenüber. Figur 1B zeigt die Anordnung auf dieser Verfahrensstufe.

In einem nächsten Verfahrensschritt wird die gesamte Anordnung zunächst bis zur Erweichungstemperatur Tₘ des thermoplastischen Kunststoffs und anschließend weiter bis zur Expansionstemperatur T_{X} des in der thermoplastischen Kunststoffmasse fein verteilten Treibmittels aufgeheizt. Ist die Expansionstemperatur erreicht oder überschritten, wird aus dem Treibmittel ein Gas oder eine flüchtige Verbindung freigesetzt und führt zu einer Expansion der thermoplastischen Kunststoffmischung, die aufgrund der viskosen Struktur nach Aufschmelzen der Expansion wenig Kräfte entgegensetzt. Aufgrund des Volumenzuwachses überbrückt der Kunststoff KS dabei den Spalt SP, ohne dabei jedoch nennenswerte Kräfte auf das Wandlerelement auszuüben.

Im nächsten Schritt wird das gesamte Bauelement wieder bis unter die Erweichungstemperatur Tₘ des thermoplastischen Kunststoffs abgekühlt. Das Verbindungselement VE beziehungsweise der thermoplastische Kunststoff erstarrt dabei wieder, schließt die Gasbläschen fest und ortsstabil ein und eine elastisch kompressible Dichtung, die gleichzeitig als Verbindungselement VE dient, bildet sich aus.

Die Expansion führt dazu, dass das nach Abkühlen und Wiedererstarren des Kunststoffs ausgebildete Verbindungselement VE beidseitig an der Innenfläche des Oberteils OT und an der Oberseite des Wandlerelements WE anliegt und damit eine akustische Anbindung des Wandlerelements an die Umgebung schafft. Indem bereits die strukturiert aufgebrachte Kunststoffmasse KS die Schallöffnung SO oder den Schalleinlass SE oder beides ringförmig umschließt, umschließt nun auch das Verbindungselement diese beiden Öffnungen ringförmig, und dichtet im gesamten Umfang gegen Oberteil und Wandlerelement ab. Figur 1C zeigt das Bauelement auf dieser Verfahrensstufe.

Dabei ist ein definierter Schallkanal von außerhalb des Mikrofons durch den Schalleinlass SE und durch das Verbindungselement VE bis hin in die Schallöffnung des Mikrofons ausgebildet und mit Hilfe des Verbindungselements gegen das restliche Innenvolumen des Gehäuses abgedichtet. Während sich zwischen Oberteil OT und Membran MM des Wandlerelements das Frontvolumen definiert, ist das Rückvolumen BV durch das gesamte freie Restvolumen zwischen Oberteil OT und Bodenteil BT (ohne Wandlerelement) gebildet. Das einstellbare Rückvolumen BV kann relativ hoch gewählt werden, so dass das Mikrofon mit einer ausreichenden Dynamik und Empfindlichkeit betrieben werden kann.

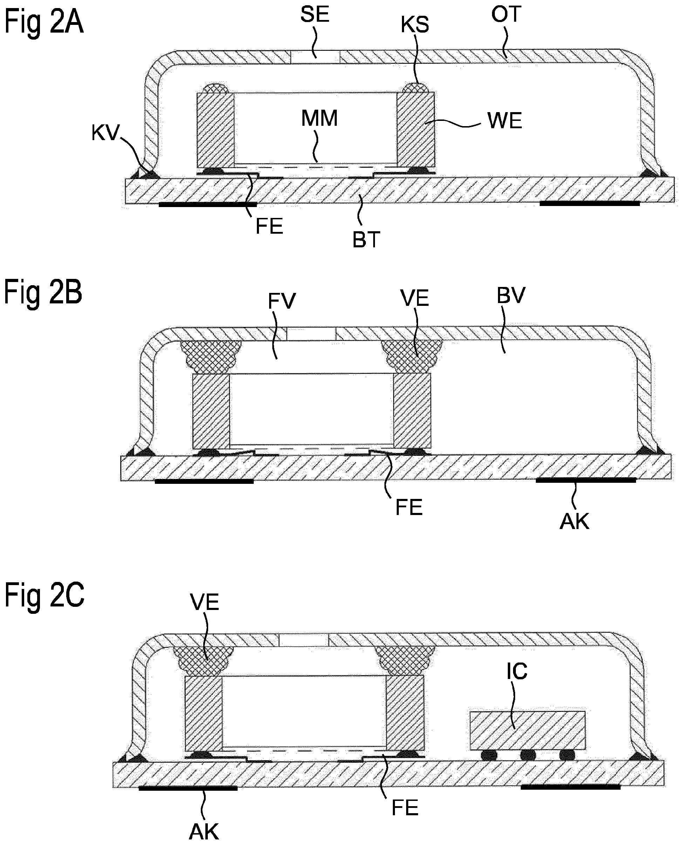

Figur 2A zeigt eine Verfahrensstufe bei der Verkapselung gemäß der zweiten Verkapselungsvariante. Dabei wird das Wandlerelement WE auf Federelemente aufgesetzt und mit diesen verlötet. Die Federelemente sind auf der Oberseite des Bodenteils BT strukturiert. Die Federelemente FE sind mit einem Ende auf dem Bodenteil verankert und mit dem anderen Ende im lichten Abstand zu diesem angeordnet. Nach dem Auflöten des Wandlerelements ist dieses nachgiebig gegenüber dem Bodenteil aufgehängt. Auch hier kann das Oberteil wieder mit dem Bodenteil verklebt sein, sodass ein Innenvolumen des Hohlraumgehäuses eingeschlossen ist.

Figur 2B zeigt die Anordnung nach dem Erhitzen der Anordnung über die Erweichungstemperatur des Thermoplasten und über die Expansionstemperatur des Treibmittels. Diese führt zu einem Aufblähen des Volumens der strukturiert aufgebrachten Kunststoffmischung. Durch die Expansion wird der zwischen Oberseite des Wandlerelements WE und Unterseite des Oberteils OT gebildete Spalt vollständig durch die expandierte Kunststoffmischung geschlossen. Die ringförmig strukturierte Aufbringung ermöglicht das Entstehen eines Verbindungselements, das entlang seines gesamten Umfangs dicht gegen Wandlerelement und Oberteil anliegt und so die Funktion eines Dichtungsrings ausüben kann.

In der Figur 2B ist darüber hinaus dargestellt, dass die durch die Expansion des Thermoplasten auf das Wandlerelement einwirkenden Kräfte die Federkraft des Federelements übersteigen können, wobei dessen zweite Enden gegen die Bodenplatte gedrückt werden. Aber auch in diesem zusammengedrückten Zustand können die Federelemente tangentiale Kräfte aufnehmen.

Figur 2B stellt eine mögliche Endstufe eines erfindungsgemäß verkapselten Mikrofons dar. Möglich ist es jedoch auch, nach einer gewissen Wartezeit eine Entspannung der Federelemente zu erzielen, bei der sich diese wieder in ihre ursprüngliche Ausgangslage zurück verformen. Die noch weiche und viskose Kunststoffmischung weicht dabei seitlich aus und reduziert sich so in ihrer vertikalen Ausdehnung entsprechend dem Druck der Federelemente.

Figur 2C zeigt eine Anordnung mit dem Verbindungselement VE, welches aus wiedererstarrter thermoplastischer Kunststoffmischung gebildet ist und wieder entspannten Federelementen. Darüber hinaus zeigt Figur 2C beispielhaft eine weitere im Inneren des Gehäuses angeordnete Komponente, beispielsweise eine integrierte Schaltung IC in Form eines ASIC-Chips. Dieser kann ebenfalls auf dem Bodenteil aufgelötet sein, beispielsweise über Bumps. Möglich ist es jedoch auch, die Komponente IC aufzukleben und über Bonddrähte mit entsprechenden Kontakten auf dem Bodenteil zu verbinden.

Das Wandlerelement WE dagegen ist alleine über die Federelemente elektrisch und mechanisch mit dem Bodenteil BT verbunden.

Die Außenkontakte des Bauelements an der Unterseite des Bodenteils dienen zum Anschluss des Mikrofons an eine Schaltungsumgebung. Die Verschaltung der Komponente IC mit dem Wandlerelement WE kann über eine Verdrahtungsebene im Inneren des Bodenteils ausgeführt sein, so dass eine geringere Anzahl an Außenkontakten erforderlich ist, als wenn jeder der Anschlüsse der Komponente IC separat für sich nach außen geführt und erst außerhalb mit den Anschlüssen des Wandlerelements verbunden werden würde.

Das erfindungsgemäße Verfahren hat den Vorteil, dass die beiden Verbindungsprozesse zwischen Oberteil und Bodenteil sowie zwischen Wandlerelement und Oberteil zeitlich und temperaturmäßig entkoppelt sind. Die Abdichtung des Spalts durch das Verbindungselement erfolgt erst nach erfolgreicher Montage des Oberteils auf dem Bodenteil. Die beiden Prozesse sind auch thermisch entkoppelt, da die Expansion der elastischen Kunststoffmischung erst bei einer Temperatur erfolgt, die vorher bei der Montage der übrigen Komponenten noch nicht überschritten werden muss. Eine ausgewählte Härtetemperatur T_{c} für die Härtung der Verklebung zwischen Oberteil und Bodenteil erfolgt daher unterhalb der Erweichungstemperatur des Thermoplasten und auch unterhalb des Schmelzpunktes des Lotbumps, mit der Wandlerelement WE und gegebenenfalls andere Komponenten EC auf dem Bodenteil aufgelötet sind.

Dadurch kann sichergestellt werden, dass die Aushärtung des Klebstoffs der Klebeverbindung KV, über die die beiden Gehäuseteile miteinander verklebt sind, und die Abdichtung durch das Verbindungselement klar zeitlich und thermisch gegeneinander abgegrenzt sind. Beide Prozesse können unabhängig voneinander optimiert und durchgeführt werden.

Durch die freigesetzten Gasbläschen entsteht eine Schaumstruktur, die im wieder erhärteten Verbindungselement VE nur geringe Verspannungen erzeugt. Dadurch dass der Thermoplast während des Verbindungsprozesses und Aufschäumens im weichen und daher viskosen Zustand vorliegt, kann sich ein durch die Expansion bedingter vertikal gegen Oberteil und Wandlerelement einwirkender Druck bei weiterer Wartezeit wieder relaxieren, da die viskose Masse zur Seite ausweichen kann. Durch die Volumenzunahme der thermoplastischen Kunststoffmischung erfolgt eine sichere und dauerhafte Abdichtung des Spalts zwischen Wandlerelement und Oberteil. Es werden nur geringe Kräfte auf das Wandlerelement übertragen und auch bei Verwendung von Federelementen können diese wieder in ihre Ruhelage zurückkehren. Insbesondere erfährt die Lotverbindung selbst bei einem späteren Wiederaufschmelzen keine unzulässige Verformung, da stets der thermoplastische Kunststoff früher erweicht, dem Druck ausweicht und nach Relaxation wieder erstarrt.

Um zu verhindern, dass die Gasbläschen aus der Kunststoffmasse im viskosen Zustand austreten oder sich zusammenschließen, sind feste oder eingekapselte Treibmittel bevorzugt. Besonders bevorzugt ist der genannte Blähgraphit. In diesem sind zwischen den Kristallebenen flüchtige Verbindungen eingelagert, die die Ebenen bei Erwärmung auseinandertreiben und so bis zu einer mehrhundertfachen Aufblähung des Blähgraphits führen. Aus diesem Grund ist ein relativ geringer Anteil dieses Treibmittels in der Kunststoffmischung erforderlich.

Die Starttemperatur für die Freisetzung des Gases (Expansionstemperatur) kann durch geeignete Auswahl der ausgasenden Komponenten im Bereich von etwa 150 bis 300 Grad Celsius gewählt werden. Auf diese Weise ist es möglich, die erforderlichen Temperaturverhältnisse beziehungsweise Temperatureigenschaften der unterschiedlichen Materialien des Mikrofons aufeinander abzustimmen.

Typischerweise beträgt die Höhe des abzudichtenden Spalts zwischen Oberteil und Wandlerelement ca. 50 bis 500 µm. Dieser kann mit ein- oder beidseitig aufgebrachten Strukturen an thermoplastischer Kunststoffmischung in einer jeweiligen Höhe von ca. 5 bis 200 µm Dicke (vor der Expansion) überbrückt werden, wobei ein Dicken-Expansionsverhältnis von 1:2 bis 1:10 günstig ist. Es können jedoch auch Dicken-Expansionsverhältnisse bis zu etwa 1:50 eingestellt werden.

Das Bodenteil kann wie gesagt einen mehrschichtigen Aufbau aufweisen und dementsprechend eine mehrlagige Schaltung umfassen. Das Schichtmaterial dieses ein- oder mehrschichtigen Bodenteils ist auf organischer oder keramischer Basis. Das Oberteil kann aus Polymeren, Keramik oder insbesondere aus Metall bestehen.

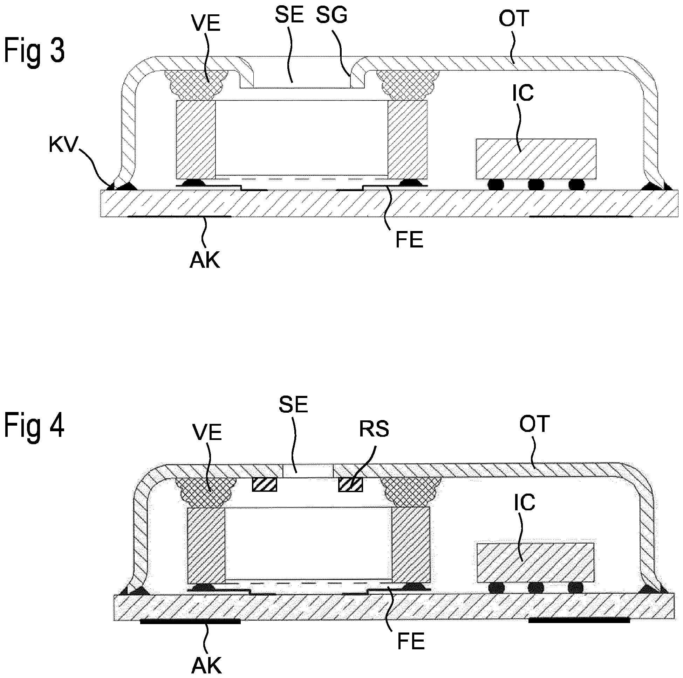

Figur 3 zeigt eine Ausführungsform des Mikrofons, mit der beim Aufschäumen ein Eindringen der Kunststoffmasse des Verbindungselements VE in den Schalleinlass SE verhindert werden kann. Dazu weist das Oberteil OT rund um den Schalleinlass SE einen nach innen/unten hinein- bzw. heruntergezogenen Rand auf. Dazu kann das Oberteil z.B. aus Metall ausgebildet werden und einen nach innen/unten gebogenen Stanzgrat SG aufweisen. Dieser lässt sich durch ein entsprechendes Stanz- oder Prägewerkezeug bei der Fertigung des Oberteils z.B. aus einem Blech einfach herstellen.

Im Ergebnis wird die laterale Ausdehnung der Kunststoffmasse des Verbindungselements VE beim Aufschäumen nach inne zum Schalleinlass SE hin begrenzt.

Figur 4 zeigt eine weitere Ausführungsform des Mikrofons, mit der ebenfalls ein Eindringen der Kunststoffmasse des Verbindungselements VE beim Aufschäumen in den Schalleinlass SE verhindert werden kann. Dazu ist innen am Oberteil rund um den Schalleinlass SE ein ringförmiger Stutzen RS angeformt oder anderweitig befestigt, z.B. durch Kleben oder Löten. Der ringförmige Stutzen RS kann aus dem gleichen Material wie das Oberteil OT bestehen oder in anderes Material umfassen. Der ringförmige Stutzen RS kann bündig mit dem Schalleinlass SE abschließen oder auch wie dargestellt einen etwas größeren Innendurchmesser als der Schalleinlass SE aufweisen. Damit wird eine größere Toleranz beim Aufbringen des Stutzens möglich.

In beiden Ausführungen gemäß der Figuren 3 und 4 ist die Höhe des Stanzgrats SG oder des ringförmigen Stutzens kleiner als der vorgesehene bzw. verbleibende Spalt zwischen der Unterseite des Oberteils OT und der Oberseite des Wandlerelements WE so das das jeweilige Element SG oder RS keine weitere Auswirkungen auf Herstellung und Funktion des Mikrofons hat.

Die Erfindung ist nur anhand weniger Ausführungsbeispiele beschrieben und daher nicht auf die konkreten Beispiele beschränkt. Die erfindungsgemäß erzielte Abdichtung zwischen Wandlerelement und Oberteil ist nicht auf bestimmte Materialien beschränkt und wird allein durch die Eigenschaften der thermoplastischen Kunststoffmasse, also des Thermoplasten und des darin enthaltenen Treibmittels bestimmt. Die erforderlichen Kenntemperaturen können in bestimmtem Umfang variiert und auf die Erfordernisse beziehungsweise den Gesamtverarbeitungsprozess optimiert werden. Im Ergebnis wird ein dicht verkapseltes Mikrofon mit guter Temperaturbeständigkeit und mit hoher Dynamik erhalten.

### Bezugszeichenliste

- AK: Außenkontakte des Mikrofons
- BT: Bodenteil
- BV: Rückvolumen
- FE: Federelement
- FV: Frontvolumen
- HR: Hohlraum im Innern des Gehäuses
- KL: strukturierte Klebstoffschicht
- KS: strukturiert aufgebrachte thermoplastische Mischung
- KV: Klebeverbindung zwischen Oberteil und Bodenteil
- MM: Membran
- OT: Oberteil
- RE: Rückelektrode
- RS: Ringförmiger Stutzen
- SE: Schalleinlass im Oberteil mit der
- SG: Stanzgrat
- SK: Schallkanal, verbindet
- SO: Schallöffnung des Wandlers
- SP: Spalt zwischen Gehäuses und Wandlerelement
- T_{M}: Erweichungstemperatur der thermoplastischen Mischung
- T_{X}: Expansionstemperatur des Treibmittels
- UK: Unterkante Oberteil
- VE: elastisches Verbindungselement aus aufgeschäumtem thermoplastischen Kunststoff, Treibmittel und eingeschlossenen Gasbläschen
- WE: Wandlerelement im Gehäuse

## Patentansprüche

1. Mikrofon
- mit einem Gehäuse, das ein Bodenteil (BT) und ein Oberteil (OT) aufweist
- mit einem Wandlerelement (WE), das in dem Gehäuse angeordnet und elektrisch und mechanisch mit dem Bodenteil verbunden ist,
- mit einem nachgiebigen Verbindungselement (VE), das weichelastisch und kompressibel ist, das zwischen Wandlerelement und Oberteil angeordnet ist und das am Wandlerelement und am Oberteil anliegt,
- wobei das Verbindungselement einen Kunststoff umfasst, in dem Gasbläschen verteilt sind,
- wobei die Gasbläschen im Verbindungselement einen Volumenanteil zwischen 50 und 98% aufweisen
- wobei das Verbindungselement an Wandlerelement und Oberteil dicht anliegt
- bei dem im Oberteil ein Schalleinlass (SE) vorgesehen ist,
- bei dem im Wandler eine Schallöffnung (SO) vorgesehen ist,
- bei dem das Verbindungselement einen Schallkanal (SK), der den Schalleinlass mit derr Schallöffnung verbindet, gegen das restliche Innenvolumen des Gehäuses abdichtet
- wobei sich zwischen dem Oberteil und einer Membran des Wandlerelements ein Frontvolumen (FV) definiert ist
- wobei ein Rückvolumen (BV) durch das gesamte freie Restvolumen zwischen Oberteil und Bodenteil gebildet ist.

2. Mikrofon nach Anspruch 1,
bei dem der Kunststoff des Verbindungselements ausgewählt ist aus
a) einem Thermoplast mit einer Erweichungstemperatur zwischen 100 und 220°C und
b) einem Duroplasten mit einem thermischen Ausdehnungskoeffizienten kleiner gleich 300ppm/K bei Raumtemperatur.

3. Mikrofon nach einem der vorangehenden Ansprüche,
bei dem der thermoplastische Kunststoff einen Erweichungspunkt Tm aufweist,
bei dem das Verbindungselement ein Treibmittel umfasst, welches bei einer Expansionstemperatur Tx ein Gas freisetzt, bei dem Tm < Tx.

4. Mikrofon nach einem der vorangehenden Ansprüche,
bei dem eines aus Oberteil und Bodenteil wannenförmig ausgebildet ist,
bei dem das Oberteil (OT) mit einem Klebstoff (KV) auf das Bodenteil (BT) aufgeklebt ist.

5. Mikrofon nach einem der vorangehenden Ansprüche,
mit einem Federelement (FE), über das das Wandlerelement elektrisch und mechanisch mit dem Bodenteil verbunden ist.

6. Mikrofon nach einem der vorangehenden Ansprüche,
bei dem das Wandlerelement mit seinen nach unten zum Bodenteil hinweisenden Anschlüssen auf die Federelemente aufgelötet ist.

7. Mikrofon nach einem der vorangehenden Ansprüche,
bei dem das Wandlerelement ein aus einem einkristallinen Material mikrostrukturierter MEMS Chip mit integrierter Membran und Rückelektrode ist,
bei dem das Wandlerelement spannungsfrei und elastisch zwischen Bodenteil samt Federelement und Oberteil samt Verbindungselement montiert ist.

8. Mikrofon nach einem der vorangehenden Ansprüche,
bei dem das im Thermoplasten des Verbindungselements enthaltene Treibmittel ausgewählt ist aus einem Ammoniumsalz, einem Carbonat, einer Carbonsäure, einem Anhydrid, einem Peroxid und Blähgraphit.

9. Verfahren zur Verkapselung eines Wandlerelements für ein Mikrofon,
- bei dem für ein einen Hohlraum umschließendes Gehäuse ein Bodenteil und ein Oberteil vorgesehen werden,
- bei dem innen im Bodenteil Federelemente vorgesehen werden,
- bei dem das Wandlerelement auf den Federelementen im Abstand zum Bodenteil aufgelötet wird
- bei dem eine thermoplastische Mischung, die ein thermisch ein Gas freisetzendes Treibmittel umfasst, strukturiert und/oder in einer definierten Menge oben auf dem Wandlerelement und/oder innen am Oberteil aufgebracht wird,
- bei dem das Oberteil auf dem Bodenteil montiert wird, so dass das Wandlerelement in einem inneren Hohlraum des Gehäuses eingeschlossen ist,
- wobei die Dimensionen des Wandlerelements und des Innenraums des Gehäuses, der Abstand des Wandlerelements vom Bodenteil und die Höhe der strukturierten thermoplastische Mischung so bemessen wird, dass zwischen Gehäuses und Wandlerelements über der thermoplastische Mischung ein Spalt verbleibt
- bei dem die gesamte Anordnung bis zu einer Erweichungstemperatur Tm der thermoplastische Mischung aufgeheizt wird, bei der Mischung viskos wird,
- bei dem weiter bis zur Expansionstemperatur Tx des Treibmittels aufgeheizt wird, wobei ein Gas aus dem Treibmittel freigesetzt wird, das zu einer Expansion der viskosen Mischung führt, so dass die viskose expandierte Mischung den Spalt verschließt
- bei dem wieder bis unter die Erweichungstemperatur Tm abgekühlt wird, so dass die expandierte Mischung erstarrt und ein festes Verbindungsmittel ausbildet.

10. Verfahren nach Anspruch 9,
- bei dem als Federkontakte metallische Blatt- oder Spiralfedern vorgesehen werden, deren erste Enden am Bodenteil befestigt sind, die gerade oder gekrümmt verlaufen und einen Abschnitt aufweisen, der parallel zur und beabstandet von der Oberfläche des Bodenteils verläuft , so dass deren zweite Enden in einem Abstand zum Bodenteil angeordnet sind,
- bei dem das Oberteil einen Schalleinlass und das Wandlerelement eine Schallöffnung aufweist,
- bei dem die thermoplastische Mischung strukturiert rund um die Schalleinlass auf dem Oberteil und/oder rund um die Schallöffnung auf dem Wandlerelement aufgebracht wird,
- bei dem das Verbindungsmittel einen Schallkanal, der vom Schalleinlass zur Schallöffnung führt, gegen das restliche Innenvolumen des Gehäuses abdichtet.

11. Verfahren nach Anspruch 9 oder 10,
bei dem die Menge an Treibmittel in der thermoplastischen Mischung so bemessen wird, dass nach bei der Expansion eine Dickenzunahme um den Faktor 2 bis 10 stattfinden kann.

12. Verfahren nach Anspruch 11,
bei dem die Schichtdicke der thermoplastischen Mischung so bemessen wird, dass bei gegebenem Faktor an Dickenexpansion ein Spalt von 50 bis 500µm geschlossen werden kann.

13. Verfahren nach einem der Ansprüche 9 bis 12,
- bei dem die Verbindung von Ober- und Bodenteil mittels eines Klebstoffs erfolgt,
- bei dem die Erweichungstemperatur Tm und Expansionstemperatur Tx der thermoplastischen Mischung so gewählt werden, dass beide Temperaturen oberhalb der zulässigen Umgebungstemperatur, oberhalb der Härtungstemperatur des Klebstoffs, aber unterhalb der Schmelztemperatur des Lotes liegen.

14. Verfahren nach einem der Ansprüche 9 bis 13,
- bei dem das Bodenteil nach oben weisende Federelemente aufweist,
- bei dem das Bodenteil auf der Unterseite angeordnete Außenelektroden aufweist, über die das Mikrofon elektrisch angeschlossen werden kann
- bei dem die zweiten Enden der Federelemente bei Ruhelage einen Abstand zum Bodenteil aufweisen,
- bei dem das Wandlerelement auf die zweiten Enden der Federelemente aufgelötet wird.

## Claims

1. Microphone
- comprising a housing which has a bottom part (BT) and a top part (OT),
- comprising a transducer element (WE) which is arranged in the housing and is electrically and mechanically connected to the bottom part,
- comprising a pliable connecting element (VE) which is flexible and compressible, which is arranged between the transducer element and the top part and which bears against the transducer element and against the top part,
- wherein the connecting element comprises a plastic in which gas bubbles are distributed,
- wherein the gas bubbles in the connecting element have a proportion by volume of between 50 and 98%,
- wherein the connecting element bears tightly against the transducer element and the top part,
- in which a sound inlet (SE) is provided in the top part,
- in which a sound opening (SO) is provided in the transducer,
- in which the connecting element seals off a sound duct (SK), which connects the sound inlet to the sound opening, from the rest of the internal volume of the housing,
- wherein a front volume (FV) is defined between the top part and a diaphragm of the transducer element,
- wherein a back volume (BV) is formed by the entire free residual volume between the top part and the bottom part.

2. Microphone according to Claim 1,
in which the plastic of the connecting element is selected from
a) a thermoplastic with a softening temperature of between 100 and 220°C, and
b) a thermoset with a coefficient of thermal expansion of less than or equal to 300 ppm/K at room temperature.

3. Microphone according to either of the preceding claims,
in which the thermoplastic material has a softening point Tm,
in which the connecting element comprises a propellant which releases a gas at an expansion temperature Tx, in which Tm < Tx.

4. Microphone according to one of the preceding claims, in which one of either the top part and the bottom part is of trough-like design,
in which the top part (OT) is adhesively bonded to the bottom part (BT) using an adhesive (KV).

5. Microphone according to one of the preceding claims, comprising a spring element (FE) by means of which the transducer element is electrically and mechanically connected to the bottom part.

6. Microphone according to one of the preceding claims, in which the transducer element, by way of its connections which point downwards to the bottom part, is soldered onto the spring elements.

7. Microphone according to one of the preceding claims, in which the transducer element is a MEMS chip, which is microstructured from a monocrystalline material and has an integrated diaphragm and back electrode,
in which the transducer element is mounted without tension and elastically between the bottom part together with the spring element and the top part together with the connecting element.

8. Microphone according to one of the preceding claims, in which the propellant which is contained in the thermoplastic of the connecting element is selected from amongst an ammonium salt, a carbonate, a carboxylic acid, an anhydride, a peroxide and expandable graphite.

9. Method for encapsulating a transducer element for a microphone,
- in which a bottom part and a top part are provided for a housing which encloses a hollow space,
- in which spring elements are provided on the inside of the bottom part,
- in which the transducer element is soldered onto the spring elements at a distance from the bottom part,
- in which a thermoplastic mixture which comprises a propellant that thermally releases a gas is applied in a structured manner and/or in a defined quantity to the top of the transducer element and/or on the inside of the top part,
- in which the top part is mounted on the bottom part, so that the transducer element is enclosed in an interior hollow space of the housing,
- wherein the dimensions of the transducer element and of the interior space of the housing, the distance of the transducer element from the bottom part and the height of the structured thermoplastic mixture is dimensioned such that a gap remains between the housing and the transducer element above the thermoplastic mixture,
- in which the entire arrangement is heated up to a softening temperature Tm of the thermoplastic mixture in which the mixture is viscous,
- in which the said arrangement is further heated up to the expansion temperature Tx of the propellant, wherein a gas is released from the propellant, which gas leads to expansion of the viscous mixture, so that the viscous expanded mixture closes the gap,
- in which the said arrangement is again cooled down to below the softening temperature Tm, so that the expanded mixture solidifies and forms a solid connecting means.

10. Method according to Claim 9,
- in which metal leaf or helical springs are provided as spring contacts, the first ends of which springs are fastened to the bottom part, which springs run in a straight line or in a curved manner and have a section which runs parallel to and at a distance from the surface of the bottom part, so that the second ends of the said springs are arranged at a distance from the bottom part,
- in which the top part has a sound inlet and the transducer element has a sound opening,
- in which the thermoplastic mixture is applied in a structured manner around the sound inlet to the top part and/or around the sound opening to the transducer element,
- in which the connecting means seals off a sound duct, which leads from the sound inlet to the sound opening, from the remaining internal volume of the housing.

11. Method according to Claim 9 or 10,
in which the quantity of propellant in the thermoplastic mixture is dimensioned such that an increase in thickness by a factor of 2 to 10 can take place after the expansion.

12. Method according to Claim 11,
in which the layer thickness of the thermoplastic mixture is dimensioned such that a gap of from 50 to 500 µm can be closed with the given factor of expansion in thickness.

13. Method according to one of Claims 9 to 12,
- in which the connection from the top part to the bottom part is made by means of an adhesive,
- in which the softening temperature Tm and the expansion temperature Tx of the thermoplastic mixture are selected such that both temperatures lie above the permissible ambient temperature, above the curing temperature of the adhesive, but below the melting point of the solder.

14. Method according to one of Claims 9 to 13,
- in which the bottom part has spring elements which point upwards,
- in which the bottom part has external electrodes which are arranged on the bottom side and by means of which the microphone can be electrically connected,
- in which the second ends of the spring elements are at a distance from the bottom part in the inoperative position,
- in which the transducer element is soldered onto the second ends of the spring elements.

## Revendications

1. Microphone comprenant
- un boîtier qui comporte une partie fond (BT) et une partie supérieure (OT)
- un élément transducteur (WE) qui est disposé dans le boîtier et qui est relié électriquement et mécaniquement à la partie fond,
- un élément de liaison flexible (VE) qui est élastique et compressible, qui est disposé entre l'élément transducteur et la partie supérieure et qui vient en appui sur l'élément transducteur et la partie supérieure,
- l'élément de liaison comprenant une matière synthétique dans laquelle des bulles de gaz sont réparties,
- les bulles de gaz de l'élément de liaison représentant une fraction volumique comprise entre 50 et 98 %,
- l'élément de liaison venant en appui de manière étanche sur l'élément transducteur et la partie supérieure,
- une entrée acoustique (SE) étant prévue dans la partie supérieure,
- une ouverture acoustique (SO) étant prévue dans le transducteur,
- l'élément de liaison étanchéifiant un canal acoustique (SK), qui relie l'entrée acoustique à l'ouverture acoustique, par rapport au volume intérieur restant du boîtier,
- un volume avant (FV) étant défini entre la partie supérieure et une membrane de l'élément transducteur,
- un volume arrière (BV) étant formé par le volume résiduel libre total entre la partie supérieure et la partie fond.

2. Microphone selon la revendication 1,
dans lequel la matière synthétique de l'élément de liaison est choisi parmi
a) une matière thermoplastique dont la température de ramollissement est comprise entre 100 et 220 °C et
b) une matière plastique thermodurcissable dont le coefficient de dilatation thermique est inférieur ou égal à 300ppm/K à température ambiante.

3. Microphone selon l'une des revendications précédentes, dans lequel
la matière thermoplastique a un point de ramollissement Tm,
l'élément de liaison comprend un propulseur qui libère un gaz à une température d'expansion Tx, avec Tm < Tx.

4. Microphone selon l'une des revendications précédentes, dans lequel
l'une parmi la partie supérieure et la partie fond est en forme de cuvette,
la partie supérieure (OT) est collée à la partie fond (BT) avec un adhésif (KV).

5. Microphone selon l'une des revendications précédentes, comprenant un élément à ressort (FE) qui relie l'élément transducteur électriquement et mécaniquement à la partie fond.

6. Microphone selon l'une des revendications précédentes, dans lequel l'élément transducteur est soudé sur les éléments à ressort par ses bornes dirigées vers le bas en direction de la partie fond.

7. Microphone selon l'une des revendications précédentes, dans lequel
l'élément transducteur est une puce MEMS micro-structurée en matériau monocristallin qui comporte une membrane intégrée et une électrode arrière,
l'élément transducteur est monté sans tension et élastiquement entre la partie fond pourvue de l'élément à ressort et la partie supérieure pourvue de l'élément de liaison.

8. Microphone selon l'une des revendications précédentes, dans lequel le propulseur contenu dans la matière thermoplastique de l'élément de liaison est choisi parmi un sel d'ammonium, un carbonate, un acide carboxylique, un anhydride, un peroxyde et un graphite expansible.

9. Procédé d'encapsulation d'un élément transducteur destiné à un microphone, dans lequel
- une partie fond et une partie supérieure sont destinées à un boîtier renfermant une cavité,
- des éléments à ressort sont prévus à l'intérieur de la partie fond,
- l'élément transducteur est soudé sur les éléments à ressort à distance de la partie fond,
- un mélange thermoplastique, qui comprend un propulseur libérant thermiquement un gaz, est structuré et/ou appliqué dans une quantité définie en haut sur l'élément transducteur et/ou à l'intérieur sur la partie supérieure,
- la partie supérieure est montée sur la partie fond de sorte que l'élément transducteur soit enfermé dans une cavité intérieure du boîtier,
- les dimensions de l'élément transducteur et l'espace intérieur du boîtier, la distance de l'élément transducteur à la partie fond et la hauteur du mélange thermoplastique structuré sont telles qu'un espace subsiste entre le boîtier et l'élément transducteur au-dessus du mélange thermoplastique,
- l'ensemble est chauffé jusqu'à une température de ramollissement Tm du mélange thermoplastique à laquelle le mélange devient visqueux,
- et est en outre chauffé jusqu'à la température d'expansion Tx du propulseur, un gaz étant libéré du propulseur, ce qui entraîne une expansion du mélange visqueux de sorte que le mélange expansé visqueux ferme l'espace,
- et est à nouveau refroidi au-dessous de la température de ramollissement Tm de sorte que le mélange expansé se solidifie et forme un moyen de liaison solide.

10. Procédé selon la revendication 9, dans lequel
- des ressorts à lames ou en spirale métalliques sont prévus comme contacts à ressort dont les premières extrémités sont fixées à la partie fond, lesquelles sont droites ou courbes et comportent une portion qui s'étend parallèlement à la surface de la partie fond et à distance de ladite surface de sorte que leurs deuxièmes extrémités soient disposées à distance de la partie fond,
- la partie supérieure comporte une entrée acoustique et l'élément transducteur comporte une ouverture acoustique,
- le mélange thermoplastique est appliqué de manière structurée tout autour de l'entrée acoustique sur la partie supérieure et/ou tout autour de l'ouverture acoustique sur l'élément transducteur,
- le moyen de liaison étanchéifie un canal acoustique, qui va de l'entrée acoustique à l'ouverture acoustique, du volume intérieur restant du boîtier.

11. Procédé selon la revendication 9 ou 10, dans lequel la quantité de propulseur dans le mélange thermoplastique est mesurée de telle sorte qu'une augmentation d'épaisseur d'un facteur de 2 à 10 puisse se produire après l'expansion.

12. Procédé selon la revendication 11, dans lequel l'épaisseur de couche du mélange thermoplastique est dimensionnée de telle sorte qu'un espace de 50 à 500 µm puisse être fermé pour un facteur d'expansion d'épaisseur donné.

13. Procédé selon l'une des revendications 9 à 12, dans lequel
- la partie supérieure et la partie inférieure sont reliées au moyen d'un adhésif,
- la température de ramollissement Tm et la température d'expansion Tx du mélange thermoplastique sont choisies de manière à ce que les deux températures soient supérieures à la température ambiante admissible, supérieures à la température de durcissement de l'adhésif, mais inférieures à la température de fusion de la soudure.

14. Procédé selon l'une des revendications 9 à 13, dans lequel
- la partie fond comporte des éléments à ressort dirigés vers le haut,
- la partie fond comporte des électrodes extérieures disposées sur la face inférieure et permettant de relier électriquement le microphone,
- les deuxièmes extrémités des éléments à ressort sont à une distance de la partie fond en position de repos,
- l'élément transducteur est soudé sur les deuxièmes extrémités des éléments à ressort.
